Europäisches Patentamt

**European Patent Office**

**Office européen des brevets**

(19)

(11) Numéro de publication: **0 026 739**

**A1**

(12) # DEMANDE DE BREVET EUROPEEN

(21) Numéro de dépôt: **80810291.7**

(22) Date de dépôt: **16.09.80**

(51) Int. Cl.³: **A 23 L 1/315**
**A 23 B 4/04**

(30) Priorité: **26.09.79 CH 8663/79**

(43) Date de publication de la demande:
**08.04.81 Bulletin 81/14**

(84) Etats Contractants Désignés:
**AT BE DE FR GB IT LU NL SE**

(71) Demandeur: **Facchinetti, Gilbert**
**Chemin des Deleynes**
**CH-2072 St.-Blaise(CH)**

(71) Demandeur: **Matile, Jean-Maurice**
**Tête de Ran 6**
**CH-2208 Les-Hauts-Geneveys(CH)**

(72) Inventeur: **Facchinetti, Silvio**

**décédé(CH)**

(72) Inventeur: **Matile, Jean-Maurice**
**Tête de Ran 6**
**CH-2208 Les Hauts-Geneveys(CH)**

(74) Mandataire: **Seehof, Michel et al,**
**c/o AMMANN INGENIEURS-CONSEILS EN PROPRIETE**
**INTELLECTUELLE SA BERNE Schwarztorstrasse31**
**CH-3001 Berne(CH)**

(54) **Viande cuite et fumée et sa fabrication.**

(57) Pour fabriquer de la viande cuite et fumée ayant un goût de jambon, on emploie de la viande de volaille désossée et on la traite de manière analogue à la viande de porc par épiçage, salage, malaxage, moulage, cuisson et dans un fumoir. Pour obtenir une viande analogue à celle d'un jambon traditionnel, la proportion entre la viande désossée à la main et désossée à la machine doit être au moins de deux à un, de preférénce de 4′5 à 1′5.

Une telle viande permet de réduire le surplus en viande de poule et permet aux personnes auxquelles il est défendu de manger de la viande de porc, d'avoir une viande d'un goût similaire au jambon de porc. En plus, la valeur énergétique en joules est fortement réduite.

EP 0 026 739 A1

Croydon Printing Company Ltd.

TITRE MODIFIÉ
voir page de garde

— 1 —

Procédé de fabrication de viande cuite et fumée du genre
jambon

La présente invention a pour objet un procédé de fabrication de viande cuite et fumée du genre jambon, c'est-à-dire de viande ayant le goût du jambon, sans utilisation de porc. Le jambon traditionnel, fabriqué avec de la viande de porc, bien que très apprécié d'un grand nombre de consommateurs, présente cependant certains inconvénients, tels que: son prix de revient relativement élevé, la part de matière grasse élevée correspondant à une valeur de joules par kilogramme élevée et, en particulier, pour un grand nombre de personnes, par exemple dans le Proche-Orient, la présence même de viande de porc. D'autre part, il existe une surproduction de volaille en particulier de poule, surproduction qui amène parfois les producteurs à s'en débarrasser à grande perte.

Le but de la présente invention est de remédier à ces inconvénients et de prévoir une viande cuite et fumée au goût de jambon, meilleur marché, ne nécessitant pas l'emploi de viande de porc, et permettant de faire disparaître le surplus de production de volaille. Un tel procédé est décrit dans les revendications.

L'invention est décrite, ci-après en détail. Partant, d'une part, du fait qu'un grand nombre de personnes dans le monde entier n'a pas le droit de manger de la viande de porc pour des raisons religieuses et que, d'autre part, il est nécessaire d'utiliser le surplus de volaille, notamment de poule, les inventeurs ont commencé par remplacer la viande de porc par de la viande de volaille. Il s'est avéré possible de produire de la viande cuite et fumée ayant le goût de jambon, en traitant la viande de volaille comme de la viande de porc, et en utilisant essentiellement les mêmes épices et adjonctions. Au cours des essais, il s'est avéré que la préparation de la viande est très importante. Pour utiliser celle-ci, il est nécessaire de la désosser, et il est connu qu'il est possible de la désosser à la main ou à la machine. On procède d'abord au désossage à la main, ce qui donne des pièces de viande relativement grandes. Ensuite, on désosse une partie à la machine, pour obtenir un produit bien liant. Il est nécessaire de veiller à la proportion entre la viande désossée à la main et la viande désossée à la machine. Les essais ont montré que la proportion entre la viande désossée à la main et la viande désossée à la machine, qui sert de liant, doit être au moins de deux à un, de préférence dans une proportion de 4/5 de viande désossée à la main et 1/5 de viande désossée à la machine.

Dans un exemple de fabrication, on prend de la viande de poulet, désossée à la main et à la machine, dans une proportion de 4/5 à 1/5 et on y ajoute un mélange de 2,5% en poids de sel nitrique, 1% en poids de pacoba, 1% de thé d'épice et 1% de lie de vin et un peu d'ail et d'ognions, de coriandre et de poivre. Le tout est malaxé pendant 12 heures, ensuite mis dans un moule et cuit pendant un temps correspondant à une heure par kilo et, enfin, mis dans un fumoir pendant une demi-heure. La viande résultant de ce procédé ressemble à celle d'un jambon de porc, que ce soit au plan du goût ou au plan de l'aspect.

**0026739**

Comme il a été dit plus haut, il est possible de prendre de la viande de n'importe quelle volaille comestible ou même de viande de lapin. L'utilisation de viande de volaille permet d'obtenir de la viande cuite et fumée, ayant un goût de jambon à un prix réduit d'au moins 50%, et avec une teneur en matière grasse très fortement réduite et, par conséquent, une valeur énergétique en joules réduite en conséquence, ce qui ouvre, à part les possibilités annoncées plus haut, celle d'employer un tel jambon comme nourriture diététique dans des hôpitaux, des institutions similaires ou pour l'usage domestique. Il est évident que la viande peut avoir la forme traditionelle d'un jambon, soit ronde ou carrée ou n'importe quelle autre forme désirée.

0026739

- 4 -

Revendications:

1. Procédé de fabrication de viande cuite et fumée du genre jambon, caractérisé en ce que l'on emploie de la viande désossée de volaille, et en ce que l'on traite cette viande par épiçage, salage, malaxage, moulage, cuisson et dans un fumoir.

2. Procédé selon la revendication 1, caractérisé en ce que la viande de volaille est désossée à la main et au moyen d'une machine et en ce que l'on emploie au moins le double de viande désossée à la main que désossée à la machine.

3. Procédé selon la revendication 2, caractérisé en ce que la proportion entre viande désossée à la main et à la machine est de 4/5 à 1/5.

4. Procédé selon la revendication 1, caractérisé en ce que l'on ajoute un mélange de sel nitrique, de pacoba, d'une solution de thé d'épices comprenant du genièvre, du poivre, des feuilles de laurier et de la marjolaine, de la lie de vin et un concentré d'épices d'ail et oignons.

5. Viande fumée fabriquée selon l'une quelconque des revendications 1-3,

0026739

caractérisée en ce qu'elle contient exclusivement de
la viande de poule ou de poulet.

**Office européen des brevets**

# RAPPORT DE RECHERCHE EUROPEENNE

Numéro de la demande

EP 80 81 0291

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | US - A - 3 268 339 (D. TORR) <br> * Revendication 1; colonne 2, ligne 12 - colonne 3, ligne 21; colonne 4, lignes 26-30 * <br> -- | 1,5 | A 23 L 1/315 <br> A 23 B 4/04 |
| X | FR - A - 2 151 772 (SOC. COQ. EUROP. S.I.C.A. DES VOLAILLES LANDAISES) <br> * Page 1, ligne 16 - page 2, ligne 2 * <br> -- | 1,4,5 | |
| X | FOOD TECHNOLOGY, vol. 33, no. 4, avril 1979 <br> A. MAURER "Extrusion and texturizing in the manufacture of poultry products", pages 48-51. <br> * Page 49, colonne 2, paragraphe 4 - page 50, colonne 1, paragraphe 1 * <br> -- | 1-3,5 | **DOMAINES TECHNIQUES RECHERCHES (Int. Cl. 3)** <br> A 23 L 1/315 <br> A 23 B 4/04 <br> A 23 L 1/31 <br> A 23 B 4/00 |
| X | BE - A - 838 734 (E. HAEGDORENS) <br> * Pages 1-4 * <br> -- | 1,4,5 | |
| | AT - B - 329 962 (R. FELFER) <br> * Revendications 1-4; page 2, lignes 16-42 * <br> -- | 1,4,5 | **CATEGORIE DES DOCUMENTS CITES** <br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| A | GB - A - 1 116 294 (ARMOUR) | | |
| A | US - A - 3 775 543 (T. ZYSS) | | |
| A | FR - A - 2 206 054 (R. AUDA) | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 07-01-1981 | DESMEDT |

OEB Form 1503.1  06.78